(19) Europäisches Patentamt
European Patent Office
Office européen des brevets

(11) **EP 1 330 740 B1**

(12) **EUROPÄISCHE PATENTSCHRIFT**

(45) Veröffentlichungstag und Bekanntmachung des Hinweises auf die Patenterteilung:
**08.05.2019 Patentblatt 2019/19**

(21) Anmeldenummer: **01978096.4**

(22) Anmeldetag: **07.09.2001**

(51) Int Cl.:
***G06F 16/903*** *(2019.01)*

(86) Internationale Anmeldenummer:
**PCT/DE2001/003458**

(87) Internationale Veröffentlichungsnummer:
**WO 2002/027466 (04.04.2002 Gazette 2002/12)**

(54) **VERFAHREN ZUM ZUGRIFF AUF EINE SPEICHEREINHEIT BEI DER SUCHE NACH TEILZEICHENFOLGEN SOWIE ZUGEHÖRIGE SPEICHEREINHEIT**

METHOD FOR ACCESSING A STORAGE UNIT DURING THE SEARCH FOR SUBSTRINGS, AND A CORRESPONDING STORAGE UNIT

PROCEDE D'ACCES A UNE UNITE DE MEMOIRE LORS DE LA RECHERCHE DE SUITES PARTIELLES DE CARACTERES, ET UNITE DE MEMOIRE CORRESPONDANTE

(84) Benannte Vertragsstaaten:
**DE FR GB IT**

(30) Priorität: **29.09.2000 DE 10048478**

(43) Veröffentlichungstag der Anmeldung:
**30.07.2003 Patentblatt 2003/31**

(73) Patentinhaber: **Atos IT Solutions and Services GmbH**
**81739 München (DE)**

(72) Erfinder: **RABAIOLI, Giovanni**
**85635 Höhenkirchen-Siegertsbrunn (DE)**

(74) Vertreter: **Patentanwaltskanzlei WILHELM & BECK**
**Prinzenstraße 13**
**80639 München (DE)**

(56) Entgegenhaltungen:
**WO-A1-92/15067     US-A- 4 606 002**
**US-A- 6 105 023     US-A- 6 112 204**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 1 330 740 B1

**Beschreibung**

Die Erfindung betrifft ein Verfahren zum Zugriff auf eine Speichereinheit. Bekannt sind rechnergestützte Suchverfahren, bei denen sogenannte Listen verwendet werden, in denen zu Werten eines Schlüssels Datensätze vermerkt sind, die den betreffenden Wert enthalten. Beispielsweise ist der Schlüssel der Name einer Person. Der Wert des Schlüssels ist z.B. der Name "Bauer". Die Liste für den Wert "Bauer" enthält dann Datensätze zu Personen, die den Namen "Bauer" haben. Die Datensätze enthalten meist noch weitere Datenfelder, beispielsweise zusätzlich zum Namen noch den Vornamen und eine Telefonnummer. Um die Suche nach den Daten in den anderen Datenfeldern zu erleichtern, werden sogenannte invertierte Listen eingesetzt, deren Schlüssel sich vom sogenannten Primärschlüssel unterscheidet. Beispielsweise enthält eine invertierte Liste zum Schlüssel "Ralf" alle Datensätze von Personen mit diesem Vornamen. Durch invertierte Listen wird die Rechenzeit eines bei der Suche eingesetzten Prozessors erheblich reduziert. Trotzdem kann die Rechenzeit insbesondere bei mehreren hunderttausend Datensätzen noch erheblich sein, beispielsweise mehrere Minuten.

Außerdem ist es oft erforderlich, nur eine Teilzeichenfolge zu suchen, d.h. eine Folge, die nur einen Teil der in einem Datenfeld gespeicherten Zeichen enthält. Die rechnergestützten Suchverfahren zum Suchen von Teilzeichenfolgen benötigen in der Regel noch mehr Rechenzeit als die Suchverfahren zum Suchen von Gesamtzeichenfolgen, weil für die aus einer Teilzeichenfolge bestehende Suchzeichenfolge meist keine invertierte Liste vorhanden ist.

Eine Zeichenfolge besteht aus mehreren Zeichen, denen jeweils gemäß einer Codierung eine bestimmte Bitfolge zugeordnet worden ist. Die Bitfolgen verschiedener Zeichen haben gleiche Längen, z.B. beim ASCII (American Standard Code II), oder verschiedene Längen, z.B. bei Verwendung eines Huffmann-Code.

Eine Teilzeichenfolge enthält mindestens ein Zeichen weniger als eine vollständige Zeichenfolge. Es lassen sich Anfangszeichenfolgen, Innenzeichenfolgen und Endzeichenfolgen unterscheiden. Eine Anfangszeichenfolge enthält mindestens zwei aufeinanderfolgende Zeichen, von denen ein Zeichen an dem einem Ende einer vollständigen Zeichenfolge liegt, z.B. am linken Ende. Eine Innenzeichenfolge enthält mindestens zwei aufeinanderfolgende Zeichen aus dem Inneren einer Zeichenfolge, d.h. also kein Randzeichen. Eine Endzeichenfolge enthält mindestens zwei aufeinanderfolgende Zeichen, von denen ein Zeichen an dem anderen Ende einer vollständigen Zeichenfolge liegt, z.B. des rechten Endes.

Eine Suchzeichenfolge ist eine zu suchende Zeichenfolge, die gegebenenfalls einen Suchoperator und/oder ein Platzhalterzeichen enthält. Bekannte Platzhalterzeichen sind "*" und "?". Anstelle des "*" muss ein Zeichen stehen oder es müssen mehrere Zeichen stehen. Anstelle des "?" muss ein Zeichen stehen.

Aus der WO92/15067 ist ein Teilzeichensuchverfahren bekannt, bei dem in einem Text eine Teilzeichenfolge gesucht werden soll. Die Suche erfolgt mithilfe einer Tabelle, die auf der Grundlage der Teilzeichenfolge erstellt wird. In der Tabelle ist ein Positionsraster für die einzelnen Zeichen der Teilzeichenfolge festgehalten. Dazu wird eine Kopie der Teilzeichenfolge ausgehend vom rechten Rand Zeichen für Zeichen unter der Teilzeichenfolge hindurch geschoben wird, wobei in der Tabelle festgehalten wird, wo sich jeweils eine Überdeckung ergeben hat. Die Tabelle wird dann zum Suchen der Teilzeichenfolge im Text genutzt. Bei der Suche wird so vorgegangen, dass zuerst die Tabelle für ein erstes Zeichen über den Text geschoben wird, um festzustellen, wo das Positionsmuster mit dem Text übereinstimmt. Wenn dann eine solche Übereinstimmung an einer bestimmten Textstelle festgestellt wird, wird dann die Tabelle für ein weiteres Zeichen über diese Textstelle geschoben, um festzustellen, ob auch für dieses weitere Zeichen eine Übereinstimmung zwischen dem Positionsmuster der Tabelle und der Textstelle besteht. Wenn eine die Übereinstimmung festgestellt wird, wird der Vorgang dann für ein weiteres Zeichen mit der zugeordneten Tabelle fortgesetzt. Wenn sich beim Vergleich dagegen keine Überdeckung mit der Tabelle ergibt, wird abgebrochen und an einer anderen Teststelle weitergesucht.

Es ist Aufgabe der Erfindung, zum Zugriff auf eine Speichereinheit ein einfaches Verfahren anzugeben, das insbesondere bei der Suche nach Teilzeichenfolgen weniger Rechenzeit als bisherige Verfahren bei vertretbarem Speicheraufwand benötigt. Außerdem sollen eine zugehörige Speichereinheit und ein zugehöriges Programm angegeben werden.

Die das Verfahren betreffende Aufgabe wird durch die im Patentanspruch 1 angegebenen Verfahrensschritte gelöst. Weiterbildungen sind in den Unteransprüchen angegeben.

Die Erfindung geht von der Überlegung aus, dass ein erster Ansatz für ein schnelles Suchverfahren nach Teilzeichenfolgen darin bestehen könnte, für jede mögliche Suchfolge bzw. Teilzeichenfolge einer Gesamtfolge eine inverse Liste anzulegen. Dies würde zu einer großen Anzahl von Indexlisten führen, weil für jede Gesamtzeichenfolge eine große Anzahl von Zeichenkombinationen als Suchfolge und damit auch als Teilzeichenfolge auftreten kann. Weiterhin würden die inversen Listen für ein oder zwei Zeichen sehr viele Einträge haben. Der Speicherbedarf eines solchen Ansatzes wäre also sehr groß.

Deshalb wird beim erfindungsgemäßen Verfahren ein anderer Ansatz gewählt. Beim erfindungsgemäßen Verfahren werden in einem Schreibmodus in der Speichereinheit für mehrere Gesamtzeichenfolgen jeweils mindestens zwei Teilzeichenfolgen gespeichert, die jeweils aufeinanderfolgende Zeichen der betreffenden Gesamtzeichenfolge enthalten. Im Schreibmodus werden zu einer Teilzeichenfolge jeweils mehrere Datensätze vermerkt, deren Daten die Zeichen der Teilzeichenfolge enthalten. Weiterhin wird eine Suchzeichenfolge aus aufeinanderfolgenden Zeichen vorgegeben. Aus der Suchzeichenfolge wird automatisch auf die gleiche Art wie die Teilzeichenfolgen mindestens eine Teilsuchzeichenfolge aus aufeinanderfolgenden Zeichen der Suchzeichenfolge ermittelt. In einem Lesemodus der Speichereinheit wird zu der Teilsuchzeichenfolge bzw. werden zu den Teilsuchzeichenfolgen mindestens eine Teilzeichenfolge ermittelt, welche die gleiche Folge von Zeichen enthält wie die Teilsuchzeichenfolge. Im Lesemodus der Speichereinheit werden außerdem die zu einer ermittelten Teilzeichenfolge gespeicherten Vermerke oder Datensätze gelesen. Die gelesenen Vermerke oder Datensätze werden zur Einschränkung des Suchergebnisses genutzt.

Beim erfindungsgemäßen Verfahren wird also nicht direkt nach der Suchzeichenfolge gesucht. Aus der Suchzeichenfolge werden erst Teilsuchzeichenfolgen ermittelt, zu denen es möglicherweise invertierte Listen gibt. Demzufolge werden beim erfindungsgemäßen Verfahren nicht zu allen Suchzeichenfolgen invertierte Listen gespeichert, sondern nur zu bestimmten Teilsuchzeichenfolgen. Das ermitteln der Teilsuchzeichenfolgen auf die gleiche oder ähnliche Art wie die Teilzeichenfolgen bedeutet vorrangig mit dem gleichen Ergebnis. Veränderungen in der Reihenfolge, in der die Teilsuchzeichenfolgen erzeugt werden sind unerheblich. Durch diese Maßnahme lässt sich der zum Abspeichern der invertierten Listen benötigte Speicherplatz erheblich beschränken im Vergleich zu dem zum Abspeichern aller kombinatorisch möglichen Suchzeichenfolgen bzw. Teilzeichenfolgen. Beim erfindungsgemäßen Verfahren werden nach Art einer Vorauswahl invertierte Listen zu den Teilsuchzeichenfolgen ermittelt. Anschließend muss in einem zweiten Schritt das Ergebnis eingeschränkt werden. Dazu lassen sich die in den ermittelten Teilsuchzeichenfolgen gespeicherten Vermerke oder die Daten der vermerkten Datensätze einsetzen. Durch das zweistufige Suchverfahren wird zwar etwas mehr Rechenzeit benötigt, als bei einem einstufigen Zugriff auf nur eine invertierte Liste. Jedoch kann bei etwa gleichen Rechenzeiten zur Suche eine erheblich Einschränkung des Speicherplatzes zum Speichern der invertierten Listen erreicht werden.

Bei einer Weiterbildung des erfindungsgemäßen Verfahrens werden aus der Suchzeichenfolge zwei Teilsuchzeichenfolgen ermittelt. Im Lesemodus wird zu jeder Teilsuchzeichenfolge mindestens eine Teilzeichenfolge ermittelt. Die zu den ermittelten Teilzeichenfolgen gespeicherten Vermerke oder Datensätze werden gelesen. Zur Einschränkung der Suche werden die Vermerke ermittelt, die zu jeder ermittelten Teilzeichenfolge vermerkt worden sind. Dabei lässt sich die logische UND-Operation einsetzen. Wird zu einer Teilsuchzeichenfolge keine Teilzeichenfolge ermittelt, so lässt sich der Suchvorgang abbrechen, weil die UND-Operation in diesem Fall später eine leere Menge ergeben würde.

Bei einer nächsten Weiterbildung des erfindungsgemäßen Verfahrens wird auf mindestens zwei verschiedene Arten jeweils mindestens eine Teilsuchzeichenfolge aus der Suchzeichenfolge ausgewählt. Im Lesemodus wird zu der nach einer Art ausgewählten Teilsuchzeichenfolge jeweils mindestens eine Teilzeichenfolge ermittelt und zur Einschränkung des Suchergebnisses genutzt. Die Suchergebnisse für die verschiedenen Arten des Auswählens der Teilsuchzeichenfolge werden anschließend zusammengefasst, vorzugsweise mit Hilfe der logischen ODER-Operation. Der Aufwand für die Suche steigt für jede Art des Auswählens linear. Jedoch lassen sich Suchprozesse auch vorzeitig abbrechen. Durch die verschiedenen Arten muss vor der Suche nicht feststehen, ob die gewählte Art tatsächlich mit der zur Ermittlung der Teilzeichenfolgen der gesuchten Gesamtzeichenfolge eingesetzten Art übereinstimmt. Durch einfaches Probieren aller Arten lässt sich sicherstellen, dass auch die tatsächlich verwendete Art berücksichtigt wird. Durch geschickte Wahl der Auswahlarten lässt sich auch erreichen, dass die Anzahl der Auswahlarten sehr klein ist, beispielsweise gibt es nur zwei, drei, vier oder fünf verschiedene Arten. Dies ist eine erhebliche Einschränkung der Möglichkeiten, im Vergleich zu der Vielzahl von Kombinationen bei einer vollständigen Indexierung einer Gesamtzeichenfolge.

Bei einer anderen Weiterbildung wird jeder Zeichenposition einer Gesamtzeichenfolge mindestens eine Teilzeichenfolge zugeordnet, die das an der betreffenden Position stehende Zeichen enthält. Damit ist gewährleistet, dass bei beliebiger Suchzeichenfolge die durch die Suchzeichenfolge spezifizierte Gesamtzeichenfolge ermittelt werden kann, falls sie unter den gespeicherten Datensätzen auftritt. Alternativ oder kumulativ wird mindestens einer Zeichenposition einer Gesamtzeichenfolge nur eine Teilzeichenfolge zugeordnet. Durch diese Maßnahme verringert sich die Zahl der Teilzeichenfolgen erheblich.

Bei einer anderen Weiterbildung des erfindungsgemäßen Verfahrens sind mindestens einer Zeichenposition der Gesamtzeichenfolge genau zwei Teilzeichenfolgen zugeordnet, die jeweils das an der betreffenden Position stehende Zeichen enthalten. Durch eine solche Überlappung wird erreicht, dass die Variationsmöglichkeiten weiter eingeschränkt werden. Bei der Suche lässt sich durch diese Maßnahme auch die Aufeinanderfolge von Teilzeichen berücksichtigen. Bei der Weiterbildung kommt es nämlich zu einer Überlappung der Teilzeichenfolgen.

Bei einer anderen Weiterbildung ist mindestens eine Gruppe einander benachbarter Positionen der Gesamtzeichenfolge genau zwei Teilzeichenfolgen zugeordnet, die jeweils die an den betreffenden Positionen stehenden Zeichen enthalten. Durch die Überlappung in mehreren Zeichen lässt sich die Aufeinanderfolge von Teilsuchzeichenfolgen noch besser berücksichtigen.

Bei einer anderen Weiterbildung enthalten zumindest die innerhalb von Gesamtzeichenfolgen liegenden Teilzeichenfolgen die gleiche Anzahl Zeichen der Gesamtzeichenfolge. Bei Datenbanken mit bis zu zwanzigtausend Datensätzen werden vorzugsweise Teilzeichenfolgen mit drei Zeichen eingesetzt. Bei größeren Datenbanken, beispielsweise bei Datenbanken mit mehreren hunderttausend Datensätzen werden Teilzeichenfolgen mit vier Zeichen eingesetzt. Mit zunehmender Anzahl von Zeichen je Teilzeichenfolge steigt die Anzahl der möglichen Arten des Auswählens einer Teilzeichenfolge bzw. Teilsuchzeichenfolge aus der Suchzeichenfolge. Bei Datenbanken mit mehreren hunderttausend Datensätzen wurden sehr gute Ergebnisse hinsichtlich Speicherplatz und Zugriffszeit mit Teilzeichenfolgen aus vier Zeichen und einer Überlappung von zwei Zeichen erreicht.

Am Anfang von Gesamtzeichenfolgen liegende Teilzeichenfolgen enthalten bei einer nächsten Weiterbildung eine geringe Anzahl von Zeichen der Gesamtzeichenfolge als innerhalb von Gesamtzeichenfolgen liegende Teilzeichenfolgen. Beispielsweise enthalten die am Anfang liegenden Teilzeichenfolgen ein Zeichen der Gesamtzeichenfolge weniger als die im Inneren der Gesamtzeichenfolge liegenden Teilzeichenfolgen. Diese Maßnahme trägt der Tatsache Rechnung, dass bei der Teilzeichenfolge am Anfang einer Gesamtzeichenfolge noch nicht auf die Reihenfolge zu vorhergehenden Teilzeichenfolgen geachtet werden muss. Um ein einheitliches Verfahren auszuführen und um die Suche nach am Anfang liegenden Teilzeichenfolgen zu vereinfachen, werden die am Anfang liegenden Gesamtzeichenfolgen besonders vermerkt, beispielsweise in einem besonderen Speicherabschnitt oder durch Voranstellen eines Zeichens, das in den Gesamtzeichenfolgen nicht enthalten ist.

Bei einer nächsten Weiterbildung werden aus der Suchzeichenfolge auf die gleiche Art Suchteilzeichenfolgen ermittelt, wie aus der Gesamtzeichenfolge die Teilzeichenfolgen ermittelt werden. Dadurch ist sichergestellt, dass auch bei einer Indexierung nur ausgewählte Teilzeichenfolgen jeder Gesamtzeichenfolge ermittelt werden kann, die die ausgewählten Teilzeichenfolgen enthält. "Auf die gleiche oder ähnliche Art" ist dabei ergebnisbezogen zu verstehen. Abweichungen in der Reihenfolge, in der die Teilzeichenfolgen bzw. die Teilsuchzeichenfolgen erzeugt werden sind unerheblich.

Bei mehreren Möglichkeiten zur Auswahl der Suchteilzeichenfolgen innerhalb der Suchzeichenfolge werden bei einer Weiterbildung verschiedene Startpositionen gewählt. Ausgehend von einer Startposition werden die Suchteilzeichenfolgen auf gleiche Art ausgewählt. Die Weiterbildung wird insbesondere angewendet, wenn durch Platzhalterzeichen in der Suchteilzeichenfolge festgelegt ist, dass sich die zu suchende Zeichenfolge im Inneren oder am Ende einer Gesamtzeichenfolge befindet.

Bei Suchzeichenfolgen zur Suche von Anfangszeichenfolgen wird bei einer anderen Weiterbildung die Teilsuchzeichenfolge nur auf eine Art ausgewählt. Als Bezugspunkt lässt sich beispielsweise der Anfang der Zeichenfolge wählen. Ausgehend von diesem Bezugspunkt gibt es nur eine Möglichkeit zum Festlegen der Teilsuchzeichenfolgen auf die gleiche Art wie die Teilzeichenfolgen.

Bei eine anderen Weiterbildung sind die Zeichen Buchstaben und/oder Ziffern, die gemäß einer Codiervorschrift jeweils in eine Bitsequenz vorgegebener Länge codiert sind. Das erfindungsgemäße Verfahren lässt sich jedoch auch bei Zeichen einsetzen, die beispielsweise Bildelemente darstellen.

Bei einer nächsten Weiterbildung enthält die Suchzeichenfolge mindestens an einer Position ein Platzhalterzeichen für mindestens ein Zeichen. Die Teilsuchzeichenfolgen ohne Platzhalterzeichen werden bei der Suche bevorzugt vor Teilsuchzeichenfolgen mit Platzhalterzeichen benutzt. Ein Platzhalterzeichen in einer Teilsuchfolge führt oft zu sehr vielen invertierten Listen. Durch geschickte Wahl der Teilsuchzeichenfolgen lässt sich erreichen, dass nicht alle Teilsuchzeichenfolgen berücksichtigt werden müssen und dennoch ein vollständiges Suchergebnis angegeben werden kann. Deshalb werden solche Teilsuchzeichenfolgen nicht berücksichtigt, die zu keiner wesentlichen Einschränkung des Suchergebnisses führen, d.h. insbesondere Teilsuchzeichenfolgen mit Platzhalterzeichen.

Bei einer nächsten Weiterbildung des erfindungsgemäßen Verfahrens wird zur Einschränkung der Suche ein Vergleich von Daten aus vorausgewählten Datensätzen mit der gesamten Suchzeichenfolge ausgeführt. Erst durch diese Maßnahme lässt sich sicherstellen, dass die letztlich ausgewählten Datensätze auch tatsächlich die Suchzeichenfolge enthalten. Durch das Aufteilen in Teilsuchzeichenfolgen allein, lässt sich diese Eindeutigkeit nicht immer gewährleisten.

Die Erfindung betrifft außerdem eine Speichereinheit. In der Speichereinheit sind die Teilzeichenfolgen gespeichert. Außerdem sind zu den Teilzeichenfolgen jeweils mehrere Datensätze vermerkt, in denen Daten mit den betreffenden Teilzeichenfolgen enthalten sind. Bei einer Weiterbildung der Speichereinheit sind in der Speichereinheit Daten gespeichert, die zur Durchführung des erfindungsgemäßen Verfahrens oder einer seiner Weiterbildungen benötigt werden, beispielsweise die Datensätze. Damit gelten die oben genannten technischen Wirkungen auch für die Speichereinheit und deren Weiterbildung.

Die Erfindung betrifft außerdem ein Programm, bei dessen Ausführung durch den Prozessor die Verfahrensschritte nach dem erfindungsgemäßen Verfahren oder einer seiner Weiterbildungen ausgeführt werden. Damit gelten die oben genannten technischen Wirkungen auch für das Programm.

Im Folgenden werden Ausführungsbeispiele der Erfindung an Hand der beiliegenden Zeichnungen erläutert. Darin zeigen:

Figur 1      eine Datenverarbeitungsanlage, in deren Speicher Suchlisten und invertierte Suchlisten gespeichert sind,

Figur 2    Teilzeichenfolgen für drei Gesamtzeichenfolgen,

Figur 3    den Teilzeichenfolgen zugeordnete invertierte Suchlisten,

Figur 4    die Aufteilung einer Suchzeichenfolge, die eine Anfangszeichenfolge enthält, in Teilzeichenfolgen,

Figur 5    die Aufteilung einer Suchzeichenfolge, die eine Innenzeichenfolge enthält, in mehrere Gruppen von Teilsuchzeichenfolgen, und

Figur 6    die Aufteilung einer Suchzeichenfolge, die eine Endzeichenfolge enthält, in mehrere Gruppen von Teilzeichenfolgen.

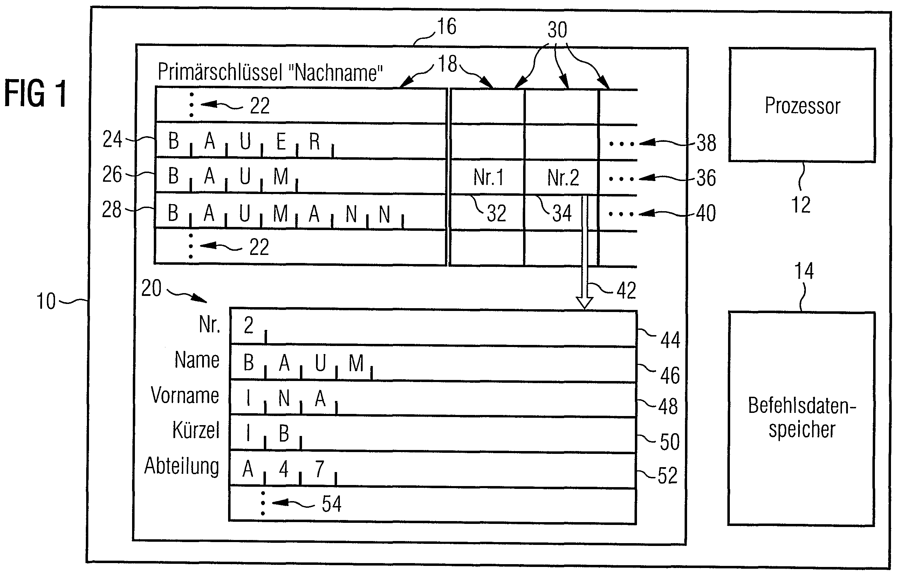

Figur 1 zeigt eine Datenverarbeitungsanlage 10, die einen Prozessor 12, einen Befehlsdatenspeicher 14 und einen Personaldatenspeicher 16 enthält. Der Prozessor 12, beispielsweise ein Prozessor der 80x86 Serie, führt im Befehlsdatenspeicher 14 gespeicherte Befehle aus, um auf den Personaldatenspeicher 16 zuzugreifen. Der Befehlsdatenspeicher 14 und der Personaldatenspeicher 16 befindet sich in einer Speichereinheit, z.B. in einem RAM (Random Access Memory), in einem ROM (Read Only Memory) oder auf einer Festplatte.

In dem Personaldatenspeicher 16 befinden sich Suchlisten 18 und Personal-Datensätze 20. In Figur 1 sind drei Suchlisten zum Primärschlüssel "Nachname", für die Nachnamen "Bauer", "Baum" und "Baumann" dargestellt. Weitere Suchlisten 22 sind durch Punkte angedeutet. Die Werte "Bauer", "Baum" und "Baumann" sind in dieser Reihenfolge in Datenfeldern 24, 26 und 28 gespeichert. Zu jedem Datenfeld 24 bis 28 gibt es mehrere Einträge 30, in denen auf Datensätze verwiesen wird, die den im jeweiligen Datenfeld gespeicherten Wert enthalten. So gehören zum Datenfeld 26 für den Nachnamen "BAUM" Einträge 32 und 34. Weitere Einträge 36 für das Datenfeld 26 sind durch Punkte angedeutet. Punkte deuten auch weitere Einträge 38 und 40 für das Datenfeld 24 bzw. für das Datenfeld 28 an. Im Eintrag 32 ist ein nicht dargestellter Datensatz Nr. 1 vermerkt. Im Eintrag 34 ist ein Datensatz mit der Nr. 2 vermerkt, der im unteren Teil des Personaldatenspeichers 16 dargestellt ist, siehe Pfeil 42.

Die Datenfelder 24 bis 28 sind beispielsweise in einem ersten Bereich des Personaldatenspeichers 16 gespeichert. Unmittelbar nach den Speicherzellen für die Speicherung der Zeichen eines Datenfeldes 24, 26 bzw. 28 ist ein Verweis auf die zugehörigen Einträge 30 gespeichert, die in einem weiteren Speicherbereich des Personaldatenspeichers 16 gespeichert sind. Durch diese Anordnung ist eine binäre Suche in den Datenfeldern 24 bis 28 erleichtert. Die Personal-Datensätze 20 haben alle den gleichen Aufbau, so dass im folgenden nur der Aufbau eines Personal-Datensatzes mit der Nummer 2 erläutert wird. Der Datensatz 20 enthält fünf Datenfelder 44 bis 52. Weitere Datenfelder 54 sind durch Punkte angedeutet. Im ersten Datenfeld 44 ist die Nummer des Datensatzes vermerkt, beispielsweise die Nr. 2. Im zweiten Datenfeld 46 ist der Name derjenigen Person vermerkt, für die der betreffende Datensatz angelegt worden ist, beispielsweise der Name "BAUM". Im dritten Datenfeld 48 ist der Vorname der betreffenden Person vermerkt, beispielsweise der Vorname "INA". Das vierte Datenfeld 50 enthält ein Kürzel, mit dem die betreffende Person unterschreibt, z.B. das Kürzel "IB" aus den Initialen des Namens "INA BAUM". Im fünften Datenfeld 52 ist die Abteilung vermerkt, in der die Person arbeitet, für die der Datensatz angelegt worden ist, beispielsweise die Abteilung "A47". Um auch die Suche nach Vornamen, Kürzeln oder Abteilungen zu erleichtern, gibt es auch für diese Schlüssel Suchlisten, die als invertierte Suchlisten bezeichnet werden. Diese Suchlisten sind jedoch in Figur 1 nicht dargestellt.

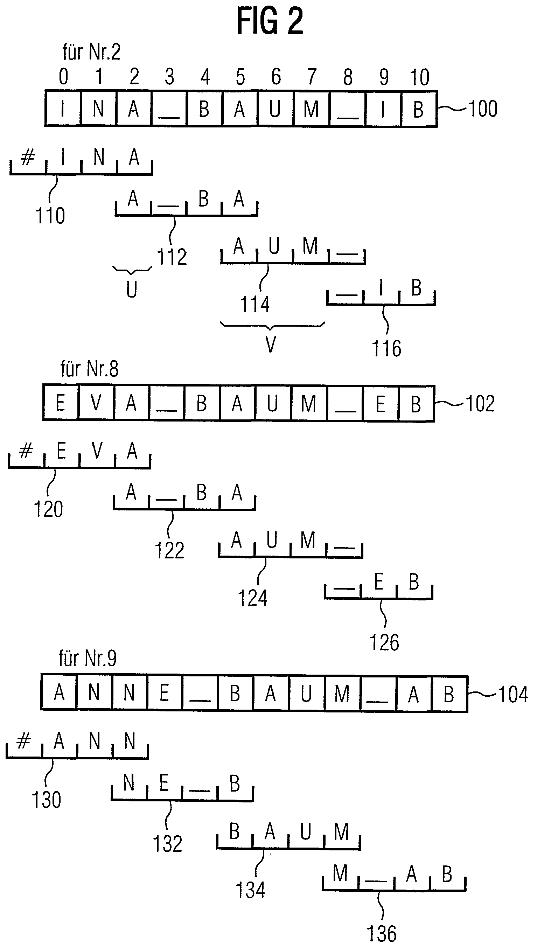

Figur 2 zeigt drei Gesamtzeichenfolgen 100, 102 und 104, die jeweils in einem Datenfeld eines Personal-Datensatzes gespeichert sind und die eine Suche nach beliebigen Bestandteilen eines Namens ermöglichen sollen. Die Gesamtzeichenfolgen 100, 102 und 104 sind in dieser Reihenfolge in Personal-Datensätzen Nr. 2, Nr. 8 und Nr. 9 gespeichert.

Die Gesamtzeichenfolge 100 enthält elf Zeichen 0 bis 10 der Zeichenfolge "INA_BAUM_IB". Der Gesamtzeichenfolge 100 werden vier Teilzeichenfolgen 110 bis 116 zugeordnet. Das Zuordnen der Teilzeichenfolgen 110 bis 116 zur Gesamtzeichenfolge 100 erfolgt nach einem für alle Gesamtzeichenfolgen 100, 102 und 104 gleichen Verfahren. Begonnen wird von links mit den ersten drei Zeichen. Diese Zeichen werden der Teilzeichenfolge 110 zugeordnet. Ein diesen Zeichen in der Teilzeichenfolge 110 vorangestelltes Zeichen "#" kennzeichnet die Teilzeichenfolge 110 als Anfangszeichenfolge. Die Teilzeichenfolge 110 lautet "#INA". Danach wird der letzte Buchstabe der Teilzeichenfolge 110 auch in die nächste Teilzeichenfolge 112 übernommen. Anschließend werden die nächstfolgenden drei Zeichen der Gesamtzeichenfolge in die Teilzeichenfolge 112 übernommen, d.h. die Zeichen "_BA". Die Teilzeichenfolge 112 lautet "A_BA". Es kommt also zu einer Überlappung U der Teilzeichenfolge 110 und der Teilzeichenfolge 112 in dem Endzeichen "A" bzw. dem Anfangszeichen "A". In einem nächsten Schritt wird der Endbuchstabe "A" als Anfangsbuchstabe "A" der Teilzeichenfolge 114 übernommen. Die dem Buchstaben "A" folgenden drei Zeichen der Gesamtzeichenfolge 100 werden an den Buchstaben "A" der Teilzeichenfolge 114 angefügt. Somit enthält die Teilzeichenfolge 114 die Zeichen "AUM_". Das Zeichen "_" wird auch in die letzte Teilzeichenfolge 116 übernommen. Anschließend werden die restlichen Buchstaben der Gesamtzeichenfolge 100 in die Teilzeichenfolge 116 übernommen. Die Teilzeichenfolge 116 enthält die Zeichen "_IB" und damit nur drei Zeichen.

Vom Anfang einer Teilzeichenfolge, z.B. vom Anfang der Teilzeichenfolge 114, bis zum Anfang der nächsten Teilzeichenfolge, z.B. bis zum Anfang der Teilzeichenfolge 116, gibt es einen Versatz V von drei Zeichen. Zwischen Überlappung U und Versatz V besteht folgender Zusammenhang:

$$U = L - V \qquad (1),$$

wobei L die Länge der Teilzeichenfolgen 110, 112 und 114 bezeichnet.

Die Gesamtzeichenfolge 102 enthält die Zeichenfolge "EVA_BAUM_EB". Der Gesamtzeichenfolge 102 werden nach dem vorgegebenen Schema wieder vier Teilzeichenfolgen 120 bis 126 zugeordnet, die in dieser Reihenfolge die Zeichenfolgen "#EVA", "A_BA", "AUM_" und "_EB" enthalten.

Die Gesamtzeichenfolge 104 enthält die Zeichenfolge "ANNE_BAUM_AB" aus zwölf Zeichen. Nach dem einheitlichen Schema werden der Gesamtzeichenfolge 104 vier Teilzeichenfolgen 130 bis 136 zugeordnet, die in dieser Reihenfolge die Zeichenfolgen "#ANN", "NE_B", "BAUM" und "M_AB" enthalten.

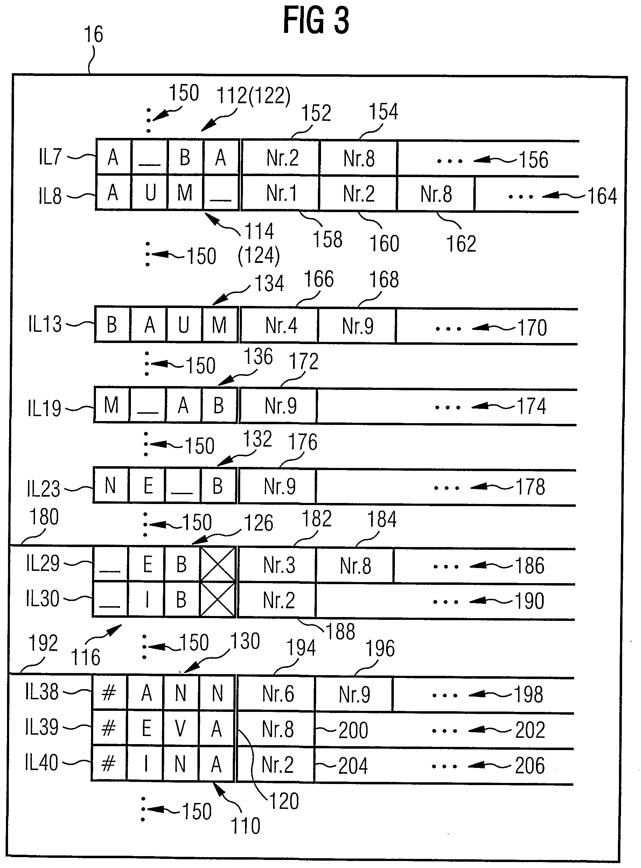

Figur 3 zeigt den Teilzeichenfolgen 110 bis 116, 120 bis 126 und 130 bis 136 zugeordnete invertierte Suchlisten IL7 bis IL40 alphabetisch geordnet. Die invertierten Suchlisten IL7 bis IL40 sind in dem Personaldatenspeicher 16 gespeichert. Punkte deuten weitere invertierte Suchlisten 150 an, die zwischen den in Figur 3 dargestellten Suchlisten bzw. vor oder nach diesen Suchlisten gespeichert sind. Die Teilzeichenfolge 112 stimmt mit der Teilzeichenfolge 122 überein. Für beide Teilzeichenfolgen 112 bis 122 wird nur eine invertierte Suchliste gespeichert, nämlich die invertierte Suchliste IL7. In Einträgen 152 und 154 sind die Nrn. 2 und 8 der Personal-Datensätze enthalten, welche die Zeichenfolge "A_BA" enthalten. Punkte deuten weitere Einträge 156 in der invertierten Suchliste IL7 an.

Eine invertierte Suchliste IL8 wurde u.a. für die Zeichenfolge "AUM_" gespeichert. Diese Zeichenfolge stimmt mit den Teilzeichenfolgen 114 und 124 überein. Es sei angenommen, dass die Zeichenfolge "AUM_" auch in einem Datenfeld des Personal-Datensatzes Nr. 1 auftritt. Einträge 158, 160 und 162 enthalten in dieser Reihenfolge Verweise auf die Personal-Datensätze Nr. 1, Nr. 2 und Nr. 8. Punkte deuten weitere Einträge 164 der invertierten Suchliste IL8 an.

Ein invertierte Suchliste IL13 wurde für die Teilzeichenfolge "BAUM" angelegt, d.h. u.a. für die Teilzeichenfolge 134. Einträge 166 und 168 der invertierten Suchliste IL13 verweisen in dieser Reihenfolge auf die Personal-Datensätze Nr. 4 und Nr. 9, welche die Teilzeichenfolge "BAUM" enthalten. Punkte deuten weitere Einträge 170 der invertierten Suchliste IL13 an.

Eine invertierte Suchliste IL19 wurde für die Teilzeichenfolge "M_AB" angelegt, d.h. u.a. für die Teilzeichenfolge 136.

Ein Eintrag 172 der inversen Suchliste IL19 verweist auf den Personal-Datensatz Nr. 9. Punkte deuten weitere Einträge 174 der invertierten Suchliste IL19 an.

Eine invertierte Suchliste IL23 wurde für die Teilzeichenfolge "NE_B" angelegt, d.h. u.a. für die Teilzeichenfolge 132. Ein Eintrag 176 der invertierten Suchliste IL23 verweist deshalb auf den Personal-Datensatz Nr. 9. Punkte deuten weitere Einträge 178 der invertierten Suchliste IL23 an. Die invertierten Suchlisten IL7, IL8, IL13, IL19 und IL23 liegen in einem Speicherbereich des Personaldatenspeichers 16, in dem Teilzeichenfolgen gespeichert sind, die jeweils vier Zeichen einer Gesamtzeichenfolge 100, 102 und 104 enthalten.

In einem davon getrennten Speicherbereich des Personaldatenspeichers 16 liegen invertierte Suchlisten für Teilzeichenfolgen von den Enden der Gesamtzeichenfolgen 100, 102 und 104 mit weniger als vier Zeichen, siehe Grenze 180. Eine invertierte Suchliste IL29 wurde für die Teilzeichenfolge "_EB" angelegt, d.h. u.a. für die Teilzeichenfolge 126. In Einträgen 182 und 184 der invertierten Suchliste IL29 sind die Personal-Datensätze Nr. 3 und Nr. 8 vermerkt. Punkte deuten weitere Einträge 186 der invertierten Suchliste 29 an.

Eine invertierte Suchliste IL30 wurde für die Teilzeichenfolge "_IB", d.h. u.a. für die Teilzeichenfolge 116 festgelegt. Die invertierte Suchliste IL30 enthält einen Eintrag 188, der auf den Personal-Datensatz Nr. 2 verweist. Punkte deuten weitere Einträge 190 der invertierten Suchliste IL30 an.

In einem nächsten getrennten Bereich des Personaldatenspeichers sind invertierte Suchlisten IL38, IL39 und IL40 u.a. für die Anfangsteilzeichenfolgen 130, 120 und 110 gespeichert, siehe Grenze 192. Die invertierte Suchliste IL38 enthält Einträge 194 und 196, welche auf die Personal-Datensätze Nr. 6 und Nr. 9 verweisen. Punkte deuten weitere Einträge 198 der invertierten Suchliste IL38 an.

Die invertierte Suchliste IL39 für die Teilzeichenfolge "#EVA" enthält einen Eintrag 200, der auf den Personal-Datensatz Nr. 8 verweist. Punkte deuten weitere Einträge 202 der invertierten Suchliste IL39 an.

Die invertierte Suchliste IL40 für die Teilzeichenfolge "#INA" enthält einen Eintrag 204, der auf den Personal-Datensatz Nr. 2 verweist. Punkte deuten weitere Einträge 206 in der invertierten Suchliste IL40 an.

Durch das Verwenden mehrerer Speicherbereiche lässt sich die Suche nach Endzeichenfolgen mit weniger als vier Zeichen und die Suche nach Anfangszeichenfolgen vereinfachen, weil nur ein relativ kleiner Speicherbereich durchsucht werden muss. Der Speicherbereich zum Speichern der Teilzeichenfolgen mit vier Zeichen ist bedeutend größer als die anderen beiden Speicherbereiche.

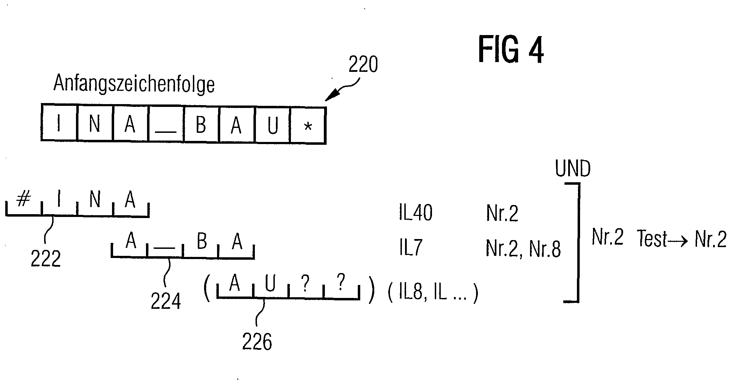

Figur 4 zeigt die Aufteilung einer Suchzeichenfolge 220 in drei Teilsuchzeichenfolgen 222 bis 226. Die Suchzeichenfolge 220 wird von einer Bedienperson der Datenverarbeitungsanlage 10 vorgegeben, die sich nur noch an den Vornamen der zu suchenden Person und an den Anfang des Nachnamens dieser Person erinnert. Die Suchzeichenfolge 220 enthält die Zeichen "INA_ BAU*". Der "*" ist ein Platzhalterzeichen für weitere Zeichen, die dem Buchstaben U folgen. Somit ist die Suchzeichenfolge 220 eine Anfangszeichenfolge.

Die Suchzeichenfolge 220 wird auf die gleiche Art in Teilsuchzeichenfolgen 222 bis 226 aufgeteilt, wie die Gesamtzeichenfolgen 100, 102 und 104 in die Teilzeichenfolgen 110 bis 136. Die ersten drei Buchstaben der Suchzeichenfolge 220 werden der ersten Teilsuchzeichenfolge 222 zugeordnet. Durch das Voranstellen des Zeichens "#" wird die Teilsuchzeichenfolge 222 als Anfangszeichenfolge gekennzeichnet. die Teilsuchzeichenfolge 222 lautet "#INA". Der Endbuchstabe der Teilzeichenfolge 222, d.h. der Buchstabe "A" wird als erster Buchstabe der nächsten Teilzeichenfolge 224 gewählt. Anschließend werden die drei dem Buchstaben "A" in der Suchzeichenfolge 220, d.h. die Zeichen "_BA" in die Teilsuchzeichenfolge 224 übernommen. Somit enthält die Teilsuchzeichenfolge 224 die Zeichen "A_BA". Der letzte Buchstabe "A" der Teilsuchzeichenfolge 224 wird als Anfangsbuchstabe der nächsten Teilsuchzeichenfolge 226 gewählt. Der verbleibende Buchstabe "U" der Suchzeichenfolge 220 wird in die Teilsuchzeichenfolge 226 übernommen. Der Rest der Teilsuchzeichenfolge 226 wird mit Platzhalterzeichen "?" ausgefüllt. Die Teilsuchzeichenfolge 226 lautet "AU??".

In einem nächsten Verfahrensschritt des Zugriffs auf den Personaldatenspeicher 16 wird dieser nach der Teilsuchzeichenfolge 222 durchsucht. Dabei wird die invertierte Suchliste IL40 ermittelt. In einem nächsten Suchschritt wird der Personaldatenspeicher 16 nach der Teilsuchzeichenfolge 224 durchsucht. Dabei wird die invertierte Suchliste IL7 ermittelt.

Eine Suche nach der Teilsuchzeichenfolge 226 würde neben der invertierten Suchliste IL8 noch weitere invertierte Suchlisten IL zum Ergebnis haben. Deshalb werden im Ausführungsbeispiel Teilsuchzeichenfolgen mit Platzhalterzeichen "?" nicht für die Suche eingesetzt. Dies ist in Figur 4 durch Klammern verdeutlicht.

In einem nächsten Verfahrensschritt werden die gefundenen invertierten Suchlisten IL40 und IL7 mit Hilfe der UND-Operation verglichen. Es wird festgestellt, dass der Personal-Datensatz Nr. 2 in beiden invertierten Suchlisten IL40 und IL7 enthalten ist. In einem nächsten Testschritt wird das Datenfeld mit der Gesamtzeichenfolge 100 aus dem Personal-Datensatz Nr. 2 gelesen und mit der gesamten Suchzeichenfolge 220 verglichen. Es wird festgestellt, dass die Suchzeichenfolge 220 in der Gesamtzeichenfolge 100 enthalten ist. Damit wird der Personal-Datensatz Nr. 2 als Ergebnis der Suche ausgegeben.

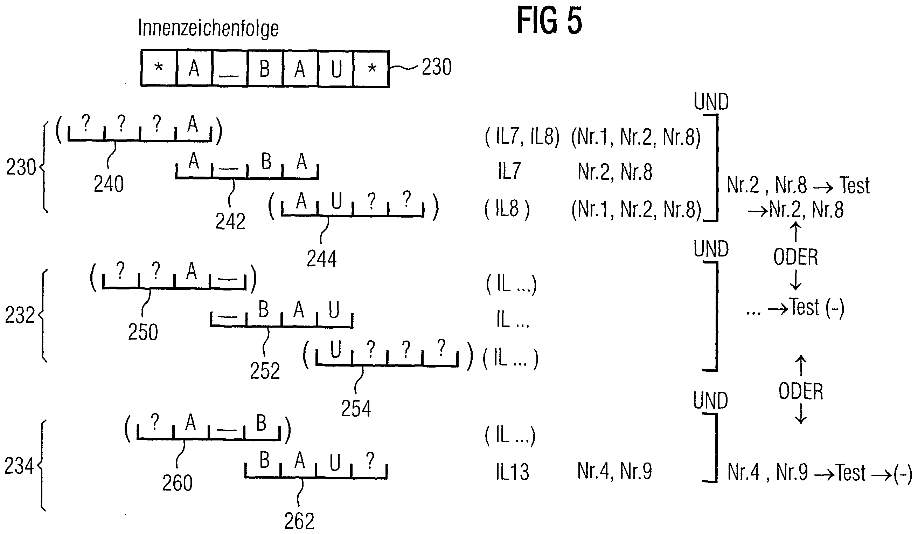

Figur 5 zeigt die Aufteilung einer Suchzeichenfolge 230 in drei Gruppen 230 bis 234 von Teilsuchzeichenfolgen. Die Suchzeichenfolge 230 wird wiederum von einer Bedienperson der Datenverarbeitungsanlage 10 vorgegeben. Die Suchzeichenfolge 230 enthält die Zeichenfolge "*A_BAU*". Aufgrund der Platzhalterzeichen "*" am Anfang und am Ende der Suchzeichenfolge 230 muss es sich um eine Innenzeichenfolge handeln.

Zunächst werden Teilsuchzeichenfolgen 240, 242 und 244 der Gruppe 230 betrachtet. Zum Festlegen der Teilsuchzeichenfolgen 240 bis 244 wird grundsätzlich so vorgegangen, wie beim Festlegen der Teilzeichenfolgen 110 bis 136 ausgehend von den Gesamtzeichenfolgen 100 bis 104. Da jedoch der Startpunkt für das Festlegen der Suchzeichenfolgen auf verschiedene Positionen der Suchzeichenfolge 230 gelegt werden kann, werden die drei Gruppen 230, 232 und 234 gebildet. Die Gruppe 230 entsteht, wenn als Startpunkt der rechts neben dem ersten Platzhalter "*" stehende Buchstabe "A" gewählt wird. Die Teilzeichenfolge 240 enthält drei Platzhalterzeichen "?" und den Endbuchstaben "A". Wie bereits erwähnt, werden jedoch Teilsuchzeichenfolgen mit Platzhalterzeichen möglichst nicht in die Suche einbezogen. Die Suche mit der Teilsuchzeichenfolge 240 würde nämlich zu viele invertierte Suchlisten als Suchergebnis haben, z.B. die invertierten Suchlisten IL7 und IL8. Klammern verdeutlichen wiederum, dass die Teilsuchzeichenfolge 240 nicht in die Suche einbezogen wird.

Die nächste Teilsuchzeichenfolge 242 enthält den letzten Buchstaben "A" der Teilsuchzeichenfolge 240 sowie die drei dem Buchstaben "A" folgenden Buchstaben "_BA" der Suchzeichenfolge 230. In der Teilsuchzeichenfolge 242 ist kein Platzhalterzeichen "?" enthalten. Deshalb wird nach einer invertierten Liste für diese Teilsuchzeichenfolge in dem Personaldatenspeicher 16 gesucht. Gefunden wird die invertierte Suchliste IL7.

Die Teilsuchzeichenfolge 244 enthält den letzten Buchstaben "A" der vorhergehenden Teilzeichenfolge 242 sowie den Rest der Suchzeichenfolge 230, d.h. die Zeichenfolge "U*". Dabei werden an Stelle des Platzhalterzeichens "*" in der Teilsuchzeichenfolge 244 zwei Platzhalterzeichen "?" ergänzt. Da die Teilsuchzeichenfolge 244 Platzhalterzeichen "?" enthält, wird sie nicht für eine Suche eingesetzt. Das Durchführen UND-Operation ist für die Gruppe 230 nicht erforderlich, da nur die Teilsuchzeichenfolge 242 von Platzhalterzeichen frei ist. In einem Testschritt werden die in der invertierten Suchliste IL7 vermerkten Datensätze gelesen, unter anderem die Datensätze Nr. 2 und Nr. 8. An Hand der Datenfelder dieser Datensätze für die Gesamtzeichenfolgen wird überprüft, ob die Gesamtzeichenfolgen die Suchzeichenfolge 230 enthalten. Dabei wird festgestellt, dass dies sowohl für den Datensatz Nr. 2 als auch für den Datensatz Nr. 8 der Fall ist. Die Suchergebnisse werden für eine spätere Ausgabe vermerkt.

Für die Gruppe 232 wird der in der Suchzeichenfolge 230 enthaltene Unterstrich als Bezugspunkt für das Auswählen von Teilsuchzeichenfolgen 250 bis 254 gewählt. Es wird wieder das einheitliche Verfahren angewendet. Die Teilsuchzeichenfolge 250 enthält die Zeichen "??A_". Aufgrund der Platzhalterzeichen "?"

wird die Teilsuchzeichenfolge 250 nicht für die Suche eingesetzt. Die Teilsuchzeichenfolge 252 enthält die Zeichenfolge "_BAU" und wird für die Suche eingesetzt. Dabei wird eine invertierte Suchliste IL ermittelt.

Die Teilsuchzeichenfolge 254 enthält die Zeichenfolge "U???" und wird somit nicht zur Suche eingesetzt. Das Ausführen der UND-Operation ist für die Gruppe 232 nicht erforderlich. Die zur Teilsuchzeichenfolge 252 ermittelte invertierte Suchliste IL ergibt, dass diese Suchliste auf keine Datensätze verweist, in denen die Suchzeichenfolge 230 enthalten ist.

Die Gruppe 234 enthält zwei Teilsuchzeichenfolgen 260 und 262. Als Bezugspunkt für das Festlegen der Teilsuchzeichenfolgen 260 und 262 wird der Buchstabe "B" der Suchzeichenfolge 230 gewählt. Die Teilsuchzeichenfolge 260 enthält die Zeichenfolge "?A_B". Aufgrund des Platzhalterzeichens "?" wird die Teilsuchzeichenfolge 260 nicht für die Suche eingesetzt. Die Teilsuchzeichenfolge 262 enthält am Anfang den letzten Buchstaben "B" der vorhergehenden Teilsuchzeichenfolge 260. Anschließend folgt der Rest der Suchzeichenfolge 230. Das Platzhalterzeichen "*" wird durch ein Platzhalterzeichen "?" ersetzt. Die Teilsuchzeichenfolge 262 enthält die Zeichenfolge "BAU?" enthält. Da beide Teilsuchzeichenfolgen 260 und 262 Platzhalterzeichen enthalten, muss eine Teilsuchzeichenfolge ausgewählt werden, die dennoch für die Suche eingesetzt wird. Im Ausführungsbeispiel ist dies die Teilsuchzeichenfolge 262. Bei der Ermittlung einer inversen Suchliste für die Teilsuchzeichenfolge 262 wird die inverse Suchliste IL13 ermittelt. In der inversen Suchliste IL13 sind unter anderem die Datensätze Nr. 4 und Nr. 9 vermerkt. Eine UND-Operation muss aufgrund der Verwendung nur einer Teilsuchzeichenfolge 262 der Gruppe 234 nicht durchgeführt werden. Beim Vergleich der gesamten Suchzeichenfolge 230 mit den Gesamtzeichenfolgen der Datensätze Nr. 4 und Nr. 9 wird festgestellt, dass keine dieser Gesamtzeichenfolgen die Suchzeichenfolge 230 enthält.

Eine Zusammenfassung der einzelnen Suchergebnisse für die Gruppen 230, 232 und 234 gemäß der ODER-Operation ergibt, dass die Datensätze Nr. 2 und Nr. 8 das Suchergebnis bilden. Diese Datensätze werden auf einem Bildschirm der Datenverarbeitungsanlage 10 ausgegeben.

Bei einem anderen Ausführungsbeispiel werden die Teilsuchzeichenfolgen 260 und 262 für die Suche verwendet. Die Gruppen 230 und 232 bleiben dabei unverändert.

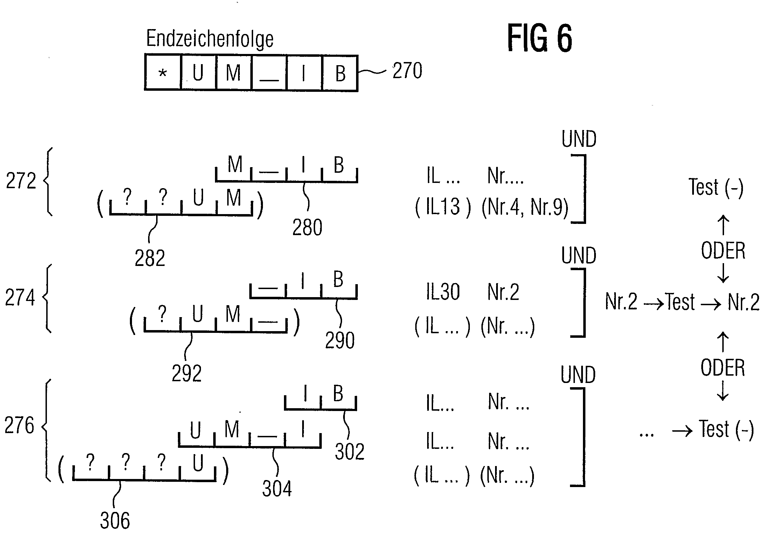

Figur 6 zeigt die Aufteilung einer Suchzeichenfolge 270 in mehrere Gruppen 272, 274 und 276 von Teilsuchzeichenfolgen. Die Suchzeichenfolge 270 wird durch eine Bedienperson vorgegeben und enthält die Zeichenfolge "*UM_IB". Aufgrund des Platzhalterzeichens "*" am Anfang der Suchzeichenfolge 270 steht fest, dass es sich um eine Endzeichenfolge handelt. Da unbekannt ist, wie viele Zeichen vor dem "U" stehen, muss das einheitliche Verfahren zum Festlegen der Teilzeichenfolgen dreimal durchgeführt werden, wobei die Gruppen 272 bis 276 entstehen. Um Teilsuchzeichenfolgen ohne Platzhalterzeichen zuerst zu erzeugen, wird beim Festlegen der Teilsuchzeichenfolgen von rechts begonnen. Ansonsten bleibt das Verfahren zum Festlegen der Teilsuchfolgen jedoch unverändert.

Für die Gruppe 272 wird der Buchstabe "M" als Bezugspunkt gewählt. Eine Teilsuchzeichenfolge 280 enthält die Zeichenfolge "M_IB". Bei der Suche nach einer invertierten Liste zu dieser Teilsuchzeichenfolge 280 wird eine invertierte Liste IL ermittelt. Die nächste Teilsuchzeichenfolge 282 enthält aufgrund der umgekehrten Reihenfolge beim Festlegen der Teilsuchzeichenfolgen 280 und 282 den ersten Buchstaben "M" der vorhergehenden Teilsuchzeichenfolge 280 an letzter Stelle. Die davor liegenden Buchstaben der Teilzeichenfolge 282 werden aus den vor dem Buchstaben "M" liegenden Zeichen der Suchzeichenfolge 270 übernommen. Die Teilsuchzeichenfolge 282 enthält die Zeichenfolge "??UM". Aufgrund der Platzhalterzeichen "?" wird die Teilsuchzeichenfolge 282 jedoch nicht für die Suche eingesetzt. Die UND-Operation muss für die Gruppe 272 nicht ausgeführt werden. Beim Test mit der gesamten Suchzeichenfolge 270 wird festgestellt, dass keiner der in der Suchliste IL vermerkten Datensätze die Suchzeichenfolge 270 enthält.

Für die Gruppe 274 wird der Unterstrich in der Bezugszeichenfolge 270 als Bezugspunkt gewählt. Zunächst wird eine Teilsuchzeichenfolge 290 aus drei Zeichen festgelegt, nämlich aus den Zeichen "_IB". Zu der Teilsuchzeichenfolge 290 wird die invertierte Suchliste IL30 ermittelt. Die invertierte Suchliste IL30 enthält, wie bereits erwähnt, den Datensatz Nr. 2. Beim Festlegen der nächsten Teilsuchzeichenfolge 292 wird das erste Zeichen "_" der Teilsuchzeichenfolge 290 als letztes Zeichen übernommen. Die anderen Zeichen werden durch die drei vor dem Unterstrich liegenden Zeichen der Suchzeichenfolge 270 gebildet. Das Platzhalterzeichen "*" wird durch das Platzhalterzeichen "?" ersetzt. Somit enthält die Teilsuchzeichenfolge 292 die Zeichenfolge "?UM_". Aufgrund des Platzhalterzeichens "?" wird die Teilsuchzeichenfolge 292 nicht zur Suche eingesetzt. Eine UND-Operation muss innerhalb der Suchergebnisse für die Gruppe 274 nicht ausgeführt werden. Bei einem Test der in der invertierten Suchliste IL30 vermerkten Datensätze wird festgestellt, dass nur der Datensatz Nr. 2 die Suchzeichenfolge 270 enthält. Der Datensatz Nr. 2 wird für eine spätere Ausgabe gespeichert.

Beim Festlegen von Teilsuchzeichenfolgen 302, 304 und 306 wird der Buchstabe "I" der Suchzeichenfolge 270 als Bezugspunkt gewählt. Die Teilsuchzeichenfolge 302 enthält die Zeichenfolge "IB". Zu der Zeichenfolge "IB" gibt es genau eine invertierte Suchliste IL. Die nächste Teilsuchzeichenfolge 304 enthält die Zeichenfolge "UM_I". Auch zu dieser Teilsuchzeichenfolge 304 wird genau eine invertierte Suchliste IL ermittelt. Die Teilsuchzeichenfolge 306 enthält die Zeichenfolge "???U" und wird aufgrund der vielen Platzhalterzeichen "?" nicht für die Suche eingesetzt. Mit Hilfe der UND-Operation werden anschließend Datensätze ermittelt, die sowohl in der invertierten Suchliste zu der Zeichenfolge "IB" als auch in der invertierten Liste zu der Zeichenfolge "UM_I" vermerkt sind. Die Ergebnisse der UND-Operation werden darauf getestet, ob die vermerkten Datensätze die Suchzeichenfolge 270 enthalten. Es sei angenommen, dass dies bei keinem der vermerkten Datensätze der Fall ist.

Anschließend werden die Suchergebnisse für die Gruppen 272, 274 und 276 gemäß der ODER-Operation zusammengefasst. Als Suchergebnis wird nur der Datensatz Nr. 2 ausgegeben.

Bei einem anderen Ausführungsbeispiel werden auch Teilsuchzeichenfolgen für die Suche eingesetzt, die ein Platzhalterzeichen "?" enthalten.

Somit ist Festzustellen, dass die UND-Verknüpfung innerhalb einer Gruppe nicht zwingend sondern zur Einschränkung der Ergebnisse zweckmäßig ist. Ein Vollständiges Prüfergebnis lässt sich aufgrund des abschließenden Vergleichs mit der Suchzeichenfolge auch ohne UND-Verknüpfung erreichen.

Die ODER-Verknüpfung der Ergebnisse mehrerer Gruppen ist jedoch zwingend, um ein vollständiges Suchergebnis zu erhalten.

## Patentansprüche

1. Verfahren zum Zugriff auf eine Speichereinheit (16), bei dem in einer Personaldaten-Speichereinheit (16) eine Mehrzahl von Suchlisten (18) und eine Mehrzahl von Personaldaten-Datensätzen (20) gespeichert sind,
wobei jeder Datensatz (20) Datenfelder (44, bis 54) umfasst, in denen jeweils eine Zeichenfolge enthalten ist,
wobei jede Suchliste (18) einen Wert eines Primärschlüssels enthält, der eine Zeichenfolge ist und in einem Datenfeld (24, 26, 28) der Suchliste gespeichert ist, wobei dem Datenfeld (24, 26, 28) Einträge (30) zugeordnet sind, in denen auf solche Datensätze aus der Mehrzahl von Datensätzen verwiesen wird, die den im Datenfeld gespeicherten Wert des Schlüssels enthalten,
bei dem für jeden Datensatz (20) aus den Zeichenfolgen in den Datenfeldern (44, 46, 48, 50, 52, 54) eine Gesamtzeichenfolge (100 bis 102) gebildet wird,
bei dem für jede Gesamtzeichenfolge (100 bis 102) jeweils mindestens zwei Teilzeichenfolgen (110 bis 136) gespeichert sind, die jeweils aufeinanderfolgende Zeichen der Gesamtzeichenfolge (100 bis 102) enthalten,
bei dem jeder Teilzeichenfolge (110 bis 136) eine invertierte Suchliste (IL7 bis IL40) zugeordnet ist, in der zu der Teilzeichenfolge (110 bis 136) Vermerke (152 bis 206) gespeichert sind, in denen solche Datensätze aus der Mehrzahl von Datensätzen (20) vermerkt sind, deren Datenfelder die Teilzeichenfolge (110) enthalten,
bei dem eine Suchzeichenfolge (220, 230, 270) vorgegeben wird, wobei aus der Suchzeichenfolge (220, 230, 270) automatisch auf gleiche oder ähnliche Art wie bei den Teilzeichenfolgen (110 bis 136) mindestens eine Teilsuchzeichenfolge (222 bis 306) aus aufeinanderfolgenden Zeichen der Suchzeichenfolge ermittelt wird, bei dem in einem Lesemodus zu der Teilsuchzeichenfolge (222 bis 306) mindestens eine Teilzeichenfolge (110 bis 136) in den invertierten Suchlisten (IL7 bis IL40) ermittelt wird, welche die gleiche Folge von Zeichen enthält, und bei dem im Lesemodus alle oder ein Teil der zu einer ermittelten Teilzeichenfolge (110 bis 136) in den invertierten Suchlisten (IL7 bis IL40) gespeicherten Vermerke (152 bis 206) oder Datensätze gelesen und zur Einschränkung des Suchergebnisses genutzt werden.

2. Verfahren nach Anspruch 1, **dadurch gekennzeichnet, dass** aus der Suchzeichenfolge (220) mindestens zwei Teilsuchzeichenfolgen (222 bis 226) ermittelt werden, im Lesemodus zu den Teilsuchzeichenfolgen (222 bis 226) jeweils mindestens eine Teilzeichenfolge (110 bis 136) ermittelt wird, dass im Lesemodus die zu den ermittelten Teilzeichenfolgen gespeicherten Vermerke gelesen werden, und dass vorzugsweise mit Hilfe der logischen UND-Operation Vermerke oder Datensätze ermittelt werden, die zu jeder ermittelten Teilzeichenfolge vermerkt worden sind.

3. Verfahren nach Anspruch 1 oder 2, **dadurch gekennzeichnet, dass** aus der Suchzeichenfolge (230) auf mindestens zwei verschiedene Arten (230, 232, 234) jeweils mindestens eine Teilsuchzeichenfolge (240 bis 262) ausgewählt wird, im Lesemodus zu der nach einer Art ausgewählten Teilsuchzeichenfolge (242) jeweils mindestens eine Teilzeichenfolge (112) ermittelt und zur Einschränkung des Suchergebnisses genutzt wird, und dass vorzugsweise mit Hilfe der logischen ODER-Operation die Suchergebnisse für die verschiedenen Arten (230, 232) des Auswählen der Teilsuchzeichenfolgen (242, 252) zusammengefasst werden.

4. Verfahren nach einem der vorhergehenden Ansprüche, **dadurch gekennzeichnet, dass** jeder Zeichenposition einer Gesamtzeichenfolge (100) mindestens eine Teilzeichenfolge (110 bis 136) zugeordnet ist, die jeweils das an der betreffenden Position stehende Zeichen enthält, und/oder dass mindestens eine Zeichenposition (0, 1) einer Gesamtzeichenfolge (100) nur einer Teilzeichenfolge (110) zugeordnet ist.

5. Verfahren nach Anspruch 4, **dadurch gekenn-**

**zeichnet, dass** mindestens einer Zeichenposition (2) der Gesamtzeichenfolgen (100) zwei Teilzeichenfolgen (110, 112) zugeordnet sind, die jeweils das an der betreffenden Position stehende Zeichen enthalten.

6. Verfahren nach Anspruch 5, **dadurch gekennzeichnet, dass** mindestens einer Gruppe einander benachbarter Positionen der Gesamtzeichenfolge zwei Teilzeichenfolgen zugeordnet sind, die jeweils die an den betreffenden Positionen stehenden Zeichen enthalten.

7. Verfahren nach einem der vorhergehenden Ansprüche, **dadurch gekennzeichnet, dass** innerhalb von Gesamtzeichenfolgen (100 bis 104) liegende Teilzeichenfolgen die gleiche Anzahl Zeichen der Gesamtzeichenfolge enthalten, vorzugsweise drei Zeichen oder vier Zeichen.

8. Verfahren nach Anspruch 7, **dadurch gekennzeichnet, dass** am Anfang von Gesamtzeichenfolgen liegende Teilzeichenfolgen (110, 120) eine geringere Anzahl Zeichen der Gesamtzeichenfolge enthalten, als innerhalb von Gesamtzeichenfolgen liegende Teilzeichenfolgen, vorzugsweise eine um den Wert 1 verringerte Anzahl, und dass vorzugsweise ein Zeichen (#), das in den Gesamtzeichenfolgen (100, 102) nicht enthalten ist, als Anfangszeichen von am Anfang liegenden Teilzeichenfolgen (110, 120) verwendet wird oder dass die am Anfang liegenden Teilzeichenfolgen (110, 120) auf andere Art vermerkt werden.

9. Verfahren nach einem der vorhergehenden Ansprüche, **dadurch gekennzeichnet, dass** aus der Suchzeichenfolge (230) auf die gleiche Art Suchteilzeichenfolgen (250, 35 252) ausgewählt werden, wie aus der Gesamtzeichenfolge (100) Teilzeichenfolgen (110, 112).

10. Verfahren nach Anspruch 9, **dadurch gekennzeichnet., dass** bei mehreren Möglichkeiten zur Auswahl der Suchteilzeichenfolgen innerhalb der Suchzeichenfolge verschiedene Startpositionen gewählt werden, von denen aus die Suchteilzeichenfolgen in gleicher Weise ausgewählt werden.

11. Verfahren nach Anspruch 9, **dadurch gekennzeichnet, dass** bei Suchzeichenfolgen (220) zur Suche von Anfangszeichenfolgen die Teilsuchzeichenfolgen (222, 224) nur auf eine Art ausgewählt werden.

12. Verfahren nach einem der vorhergehenden Ansprüche, **dadurch gekennzeichnet, dass** die Zeichen Buchstaben und/oder Ziffern sind, die gemäß einer Codiervorschrift jeweils in einer Bitsequenz vorgegebener Länge codiert sind.

13. Verfahren nach einem der vorhergehenden Ansprüche, **dadurch gekennzeichnet, dass** die Suchzeichenfolge (220) an mindestens einer Position ein Platzhalterzeichen (*) für mindestens ein Zeichen enthält, und dass Teilsuchzeichenfolgen (222, 224) ohne Platzhalterzeichen (*) bei der Suche bevorzugt vor Teilsuchzeichenfolgen (226) mit Platzhalterzeichen (*) genutzt werden.

14. Verfahren nach einem der vorhergehenden Ansprüche, **dadurch gekennzeichnet, dass** zur Einschränkung ein Vergleich von Daten von vorausgewählten Datensätzen (20) mit der gesamten Suchzeichenfolge (220) ausgeführt wird.

15. Datenverarbeitungsanlage (10) mit einem Prozessor (12) und einer Speichereinheit (14, 16), **dadurch gekennzeichnet, dass** der Prozessor (12) ausgelegt ist, die Verfahrensschritte nach einem der Ansprüche 1 bis 14 durchzuführen und die Speichereinheit (14, 16) ausgelegt ist, die Daten zu speichern , die zur Durchführung des Verfahrens nach den Ansprüchen 1 bis 14 benötigt werden.

16. Programm mit einer Befehlsfolge, bei deren Ausführung durch einen Prozessor (12) die Verfahrensschritte nach einem der Ansprüche 1 bis 14 durchgeführt werden.

**Claims**

1. Method for accessing a memory unit (16), in which a personal data memory unit (16) stores a plurality of search lists (18) and a plurality of personal-data data records (20),
wherein each data record (20) comprises data fields (44 to 54) that each contain a character string,
wherein each search list (18) contains a value of a primary key that is a character string and that is stored in a data field (24, 26, 28) of the search list,
wherein the data field (24, 26, 28) has associated entries (30) containing reference to such data records from the plurality of data records which contain the value stored in the data field for the key,
in which a total character string (100 to 102) is formed for each data record (20) from the character strings in the data fields (44, 46, 48, 50, 52, 54),
in which at least two character string sections (110 to 136) are stored for each total character string (100 to 102), said character string sections each containing successive characters from the total character string (100 to 102),
in which each character string section (110 to 136) has an associated inverted search list (IL7 to IL40) storing entries (152 to 206) for the character string section (110 to 136) that have data records from the plurality of data records (20) entered in them whose data fields contain the character string section (110), in which a search character string (220, 230, 270) is prescribed, wherein at least one search character string section (222 to 306) comprising successive characters from the search character string is ascertained from the search character string (220, 230, 270) automatically in the same or a similar manner as/to in the case of the character string sections (110 to 136),

in which, in a read mode, at least one character string section (110 to 136) which contains the same sequence of characters is ascertained in the inverted search lists (IL7 to IL40) for the search character string section (222 to 306), and

in which, in the read mode, all or a portion of the entries (152 to 206) or data records stored in the inverted search lists (IL7 to IL40) for an ascertained character string section (110 to 136) are read and are used for restricting the search result.

2. Method according to Claim 1, **characterized in that** at least two search character string sections (222 to 226) are ascertained from the search character string (220), at least one character string section (110 to 136) is ascertained for each of the search character string sections (222 to 226) in the read mode, **in that** the entries stored for the ascertained character string sections are read in the read mode, and **in that** preferably the logic AND operation is used to ascertain entries or data records which have been entered for each ascertained character string section.

3. Method according to Claim 1 or 2, **characterized in that** at least one respective search character string section (240 to 262) is selected from the search character string (230) in at least two different manners (230, 232, 234), at least one respective character string section (112) is ascertained for the search character string section (242) selected on the basis of one manner in the read mode and is used for restricting the search result, and **in that** preferably the logic OR operation is used to combine the search results for the different manners (230, 232) of selection of the search character string sections (242, 252).

4. Method according to one of the preceding claims, **characterized in that** each character position in a total character string (100) has at least one associated character string section (110 to 136) which contains the respective character that is at the relevant position, and/or **in that** at least one character position (0, 1) in a total character string (100) is associated with just one character string section (110).

5. Method according to Claim 4, **characterized in that** at least one character position (2) in the total character strings (100) has two associated character string sections (110, 112) which each contain the character that is at the relevant position.

6. Method according to Claim 5, **characterized in that** at least one group of adjacent positions in the total character string has two associated character string sections which each contain the characters that are at the relevant positions.

7. Method according to one of the preceding claims, **characterized in that** character string sections that are situated within total character strings (100 to 104) contain the same number of characters in the total character string, preferably three characters or four characters.

8. Method according to Claim 7, **characterized in that** character string sections (110, 120) that are situated at the start of total character strings contain a smaller number of characters in the total character string than character string sections that are situated within total character strings, preferably a number reduced by the value 1, and **in that** preferably a character (#) that the total character strings (100, 102) do not contain is used as a starting character for character string sections (110, 120) that are situated at the start or **in that** the character string sections (110, 120) that are situated at the start are entered in a different manner.

9. Method according to one of the preceding claims, **characterized in that** search character string sections (250, 35 252) are selected from the search character string (230) in the same manner as character string sections (110, 112) from the total character string (100).

10. Method according to Claim 9, **characterized in that** various starting positions taken as a starting point for selecting the search character string sections in the same manner are chosen when there are a plurality of options for selecting the search character string sections within the search character string.

11. Method according to Claim 9, **characterized in that** the search character string sections (222, 224) are selected just in one manner in the case of search character strings (220) for searching for starting character strings.

12. Method according to one of the preceding claims, **characterized in that** the characters are letters and/or numerals which are coded on the basis of a coding specification in a respective bit sequence of prescribed length.

**13.** Method according to one of the preceding claims, **characterized in that** the search character string (220) contains a wildcard character (*) for at least one character in at least one position, and **in that** search character string sections (222, 224) without a wildcard character (*) are used in a search in preference to search character strings (226) with a wildcard character (*).

**14.** Method according to one of the preceding claims, **characterized in that** for the purposes of restriction a comparison is executed between data from preselected data records (20) and the total search character string (220).

**15.** Data processing installation (10) having a processor (12) and a memory unit (14, 16), **characterized in that** the processor (12) is configured to carry out the method steps according to one of Claims 1 to 14 and the memory unit (14, 16) is configured to store the data which are required for carrying out the method according to Claims 1 to 14.

**16.** Program having a command sequence which, when executed by a processor (12), prompts the method steps according to one of Claims 1 to 14 to be carried out.

**Revendications**

**1.** Procédé d'accès à une unité de mémoire (16), selon lequel une pluralité de listes de recherche (18) et une pluralité d'ensembles de données personnelles (20) sont stockées dans une unité de mémoire (16) pour données personnelles,
dans lequel chaque enregistrement de données (20) comprend des champs de données (44, à 54) contenant chacun une chaîne de caractères,
dans lequel chaque liste de recherche (18) contient une valeur d'une clé primaire qui est une chaîne de caractères et est stockée dans un champ de données (24, 26, 28) de la liste de recherche, dans lequel des entrées (30) sont associées au champ de données (24, 26, 28) dans lesquelles il est fait référence à des enregistrements de données de la pluralité d'enregistrements de données qui contiennent la valeur de la clé stockée dans le champ de données,
selon lequel une chaîne de caractères totale (100 à 102) est formée pour chaque enregistrement de données (20) à partir des chaînes de caractères contenues dans les champs de données (44, 46, 48, 50, 52, 54),
selon lequel au moins deux chaînes de caractères partielles (110 à 136), qui contiennent respectivement des caractères successifs de la chaîne de caractères totale (100 à 102), sont respectivement stockées pour chaque chaîne de caractères totale (100 à 102),
selon lequel une liste de recherche inversée (IL7 à IL40) dans laquelle des notes (152 à 206) sont stockées pour la chaîne de caractères partielle (110 à 136) est associée à chaque chaîne de caractères partielle (110 à 136), notes selon lesquelles sont notés les enregistrements de données de la pluralité d'enregistrements de données (20) dont les champs de données contiennent la chaîne de caractères partielle (110),
selon lequel une chaîne de caractères de recherche (220, 230, 270) est spécifiée, dans lequel au moins une chaîne de caractères de recherche partielle (222 à 306) constituée de caractères successifs de la chaîne de caractères de recherche est automatiquement déterminée à partir de la chaîne de caractères de recherche (220, 230, 270) par une méthode identique ou similaire au cas des chaînes de caractères partielles (110 à 136),
selon lequel, dans un mode lecture, pour la chaîne de caractères de recherche partielle (222 à 306), au moins une chaîne de caractères partielle (110 à 136) qui contient la même séquence de caractères est déterminée dans les listes de recherche inversées (IL7 à IL40), et selon lequel, dans le mode lecture, tout ou partie des notes (152 à 206) ou des enregistrements de données stockés dans les listes de recherche inversées (IL7 à IL40) pour une chaîne de caractères déterminée (110 à 136) sont lues et utilisées pour restreindre le résultat de recherche.

**2.** Procédé selon la revendication 1, **caractérisé en ce qu'**au moins deux chaînes de caractères de recherche partielles (222 à 226) sont déterminées à partir de la chaîne de caractères de recherche (220), au moins une chaîne de caractères partielle (110 à 136) est déterminée pour chaque chaîne de recherche partielle (222 à 226) dans le mode de lecture, **en ce que**, dans le mode de lecture, les notes stockées pour les chaînes de caractères partielles déterminées sont lues, et **en ce que** des notes ou des enregistrements de données qui ont été notés pour chaque chaîne de caractères partielle déterminée sont de préférence déterminés au moyen de l'opération ET logique.

**3.** Procédé selon la revendication 1 ou 2, **caractérisé en ce qu'**au moins une chaîne de caractères de recherche partielle (240 à 262) est respectivement sélectionnée à partir de la chaîne de caractères de recherche (230) par au moins deux méthodes différentes (230, 232, 234), dans le mode de lecture, au moins une chaîne de caractères de recherche partielle (112) est respectivement déterminée pour la chaîne de caractères partielle (242) sélectionnée par une méthode et est utilisée pour restreindre le résultat de recherche, et **en ce que** les résultats de recherche correspondant aux différentes méthodes (230, 232) de sélection des chaînes de caractères de recherche partielles (242, 252) sont de préférence résumés à l'aide de l'opération OU logique.

4. Procédé selon l'une des revendications précédentes, **caractérisé en ce qu'**à chaque position de caractère d'une chaîne de caractères globale (100) est associée au moins une chaîne de caractères partielle (110 à 136) qui contient respectivement le caractère se trouvant à la position concernée, et/ou **en ce qu'**au moins une position de caractère (0, 1) d'une chaîne de caractères totale (100) est associée à une seule chaîne de caractères partielle (110).

5. Procédé selon la revendication 4, **caractérisé en ce qu'**à au moins une position de caractère (2) des chaînes de caractères totales (100) sont associées deux chaînes de caractères partielles (110, 112) qui contiennent respectivement le caractère situé à la position concernée.

6. Procédé selon la revendication 5, **caractérisé en ce qu'**à au moins un groupe de positions mutuellement adjacentes de la chaîne de caractères globale sont associées deux chaînes de caractères qui contiennent respectivement les caractères se trouvant aux positions concernées.

7. Procédé selon l'une des revendications précédentes, **caractérisé en ce que** des chaînes de caractères partielles se trouvant à l'intérieur de chaînes de caractères totales (100 à 104) contiennent le même nombre de caractères de la chaîne de caractères totale, de préférence trois caractères ou quatre caractères.

8. Procédé selon la revendication 7, **caractérisé en ce que** des chaînes de caractères partielles (110, 120) situées au début des chaînes de caractères totales contiennent un nombre plus petit de caractères de la chaîne totale que des chaînes de caractères partielles situées à l'intérieur de chaînes de caractères totales, et de préférence un nombre diminué de la valeur 1, et **en ce qu'**un caractère (#) qui n'est pas contenu dans les chaînes de caractères totales (100, 102) est de préférence utilisé en tant que caractère de début des chaînes de caractères partielles (110, 120) situées au début ou **en ce que** les chaînes de caractères (110, 120) situées au début sont notées par une autre méthode.

9. Procédé selon l'une des revendications précédentes, **caractérisé en ce que** des chaînes de caractères de recherche partielles (250, 35 252) sont sélectionnées à partir de la chaîne de caractères de recherche (230) par la même méthode que les chaînes de caractères de recherche (110, 112) sélectionnées à partir de la chaîne de caractères totale (100).

10. Procédé selon la revendication 9, **caractérisé en ce que**, dans le cas où il existe une pluralité de possibilités de sélection des chaînes de caractères de recherche partielles à l'intérieur de la chaîne de caractères de recherche, différentes positions de début sont sélectionnées, parmi lesquelles celles qui sont sélectionnées par la même méthode.

11. Procédé selon la revendication 9, **caractérisé en ce que**, dans le cas de chaînes de caractères de recherche (220) destinées à rechercher des chaînes de caractères de début, les chaînes de caractères de recherche partielles (222, 224) ne sont sélectionnées que par une seule méthode.

12. Procédé selon l'une des revendications précédentes, **caractérisé en ce que** les caractères sont des lettres et/ou des chiffres qui sont respectivement codés conformément à une règle de codage en une séquence binaire de longueur prédéterminée.

13. Procédé selon l'une des revendications précédentes, **caractérisé en ce que** la chaîne de caractères de recherche (220) contient un caractère générique (*) à au moins une position pour au moins un caractère, et **en ce que** des chaînes de caractères de recherche partielles (222, 224) sans caractères génériques (*) sont utilisées lors de la recherche, de préférence avant les chaînes de caractères de recherche partielles (226) contenant des caractères génériques (*).

14. Procédé selon l'une des revendications précédentes, **caractérisé en ce qu'**une comparaison de données provenant d'enregistrements de données présélectionnés (20) avec la chaîne de caractères de recherche totale (220) est effectuée à des fins de restriction.

15. Système de traitement de données (10) comportant un processeur (12) et une unité de mémoire (14, 16), **caractérisé en ce que** le processeur (12) est conçu pour effectuer les étapes du procédé selon l'une des revendications 1 à 14 et **en ce que** l'unité de mémoire (14, 16) est conçue pour stocker les données requises pour mettre en oeuvre le procédé selon les revendications 1 à 14.

16. Programme comportant une séquence d'instructions, dans lequel, lors de son exécution par un processeur (12), les étapes de procédé selon l'une des revendications 1 à 14 sont exécutées.

# FIG 1

EP 1 330 740 B1

# FIG 2

für Nr.2

| 0 | 1 | 2 | 3 | 4 | 5 | 6 | 7 | 8 | 9 | 10 |
|---|---|---|---|---|---|---|---|---|---|---|
| I | N | A | _ | B | A | U | M | _ | I | B |

~100

| # | I | N | A |
|---|---|---|---|

110

| A | _ | B | A |
|---|---|---|---|

112
U

| A | U | M | _ |
|---|---|---|---|

114
V

| _ | I | B |
|---|---|---|

116

für Nr.8

| E | V | A | _ | B | A | U | M | _ | E | B |
|---|---|---|---|---|---|---|---|---|---|---|

~102

| # | E | V | A |
|---|---|---|---|

120

| A | _ | B | A |
|---|---|---|---|

122

| A | U | M | _ |
|---|---|---|---|

124

| _ | E | B |
|---|---|---|

126

für Nr.9

| A | N | N | E | _ | B | A | U | M | _ | A | B |
|---|---|---|---|---|---|---|---|---|---|---|---|

~104

| # | A | N | N |
|---|---|---|---|

130

| N | E | _ | B |
|---|---|---|---|

132

| B | A | U | M |
|---|---|---|---|

134

| M | _ | A | B |
|---|---|---|---|

136

# FIG 3

| | | 150 | 112(122) | 152 | 154 | |
|---|---|---|---|---|---|---|
| IL7 | A | _ | B | A | Nr.2 | Nr.8 | · · · ←156 |

| IL8 | A | U | M | _ | Nr.1 | Nr.2 | Nr.8 | · · · ←164 |

114 (124)  158  160  162
: ←150

134  166  168

| IL13 | B | A | U | M | Nr.4 | Nr.9 | · · · ←170 |

: ←150   136   172

| IL19 | M | _ | A | B | Nr.9 | · · · ←174 |

: ←150   132   176

| IL23 | N | E | _ | B | Nr.9 | · · · ←178 |

180   : ←150   126   182   184

| IL29 | _ | E | B | ⊠ | Nr.3 | Nr.8 | · · · ←186 |
| IL30 | _ | I | B | ⊠ | Nr.2 | | · · · ←190 |

188
192   116   : ←150   130   194   196

| IL38 | # | A | N | N | Nr.6 | Nr.9 | · · · ←198 |
| IL39 | # | E | V | A | Nr.8 | ~200 | · · · ←202 |
| IL40 | # | I | N | A | Nr.2 | ~204 | · · · ←206 |

: ←150   120   110

16

# FIG 4

Anfangszeichenfolge

| I | N | A | _ | B | A | U | * |
|---|---|---|---|---|---|---|---|

220

# I N A _ A _ B A ( ( A _ U ? ? ) ( IL8, IL.... )

222    224    226

IL40    Nr.2

IL7    Nr.2, Nr.8    UND

Nr.2 Test→ Nr.2

EP 1 330 740 B1

# FIG 5

Innenzeichenfolge

| * | A | _ | B | A | U | * |
|---|---|---|---|---|---|---|

— 230

230 {

( ? ? ? A )
240

A _ B A
242

( A U ? ? )
244

( IL7, IL8)  (Nr.1, Nr.2, Nr.8)

IL7    Nr.2, Nr.8

( IL8 )  (Nr.1, Nr.2, Nr.8)

UND

Nr.2 , Nr.8 → Test
→Nr.2, Nr.8

232 {

( ? ? A _ )
250

_ B A U
252

( U ? ? ? ) ( IL ...)
254

( IL ...)

IL ...

UND

ODER

... →Test (-)

234 {

( ? A _ B )
260

B A U ?
262

( IL ...)

IL13    Nr.4, Nr.9

UND

ODER

Nr.4 , Nr.9 →Test →(-)

**FIG 6**

Endzeichenfolge

| * | U | M | _ | I | B |  — 270

272 {

M _ I B
( ? ? U M ) 280
282

IL ...   Nr. ....
( IL13 ) (Nr.4, Nr.9)

UND

274 {

_ I B
( ? U M _ ) 290
292

IL30   Nr.2
( IL ... ) (Nr. ...)

UND

Nr.2 →Test → Nr.2

276 {

I B
U M _ I 302
( ? ? ? U ) 304
306

IL...   Nr. ...
IL...   Nr. ...
( IL ... ) (Nr. ...)

UND

Test (-)
↑
ODER
↓

↑
ODER
↓

... → Test (-)

EP 1 330 740 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 9215067 A